# EUROPEAN PATENT SPECIFICATION

(11) **EP 4 204 510 B1**
(45) Date of publication and mention of the grant of the patent: **03.09.2025**
(21) Application number: 21878719.0
(22) Date of filing: 05.10.2021
(51) Int. Cl.: C09D 163/04, C08G 59/38, C08G 59/68, C08G 59/50, C08G 59/06, C08G 59/36

(54) **CHEMICALLY RESISTANT EPOXY COMPOSITION**
CHEMISCH BESTÄNDIGE EPOXIDZUSAMMENSETZUNG
COMPOSITION ÉPOXYDIQUE CHIMIQUEMENT RÉSISTANTE

(30) Priority: 05.10.2020 US 202063198222 P
(43) Date of publication of application: 05.07.2023
(73) Proprietor: Advanced Polymer Coatings, Inc., Avon, Ohio 44011 (US)
(72) Inventor: KEEHAN, Donald J., Avon, Ohio 44011 (US); YANG, Joey, Avon, Ohio 44011 (US); XIONG, Cheng, Avon, Ohio 44011 (US); PASATTA, Jeremy, Avon, Ohio 44011 (US)
(74) Representative: Doherty, William
(86) International application number: PCT/US2021/071716
(87) International publication number: WO 2022/076985

(56) References cited:
- EP-B1- 0 549 080
- US-A- 4 962 162
- US-A- 5 714 544
- US-B1- 6 391 979
- US-B2- 8 986 799
- US-B2- 8 986 799

## Description

### BACKGROUND

The present exemplary embodiment relates to a chemically resistant epoxy composition that makes it particularly suited for use in chemically resistant epoxy linings. It finds particular application in two component heat cured epoxy linings exhibiting high chemical resistance and will be described with particular reference thereto. However, it is to be appreciated that the present exemplary embodiment is also amenable to other like applications.

Epoxy resins for two component heat cured chemically resistant epoxy linings are known in the field. US Patent 8,986,799 describes a composition that can be used for the inner lining of cargo tanks requiring chemical resistance. One component of the lining composition is an epoxy consisting of 60 - 80% of a resorcinol diglycidyl ether (RDGE) resin and 20 - 40% of an epoxy novolak. The epoxy, when formulated into a coating, shows resistance to a cycle of chemicals, in part because RDGE is known in the industry to give very good chemical resistance. The RDGE content in the epoxy resin, however, is very high. U.S. Patent No. 6,180,723 describes an epoxy resin which comprises the reaction product of p-hydroxystyrene novolak, resorcinol and epichlorohydrin. Example 5 of U.S. Patent No. 6,180,723 describes an epoxy resin with high RDGE content (~90%) and gives no information on chemical resistance.

It would be desirable to develop an epoxy resin containing RDGE that gave excellent chemical resistance, while limiting the concentration of RDGE due to issues of crystallization and skin irritation.

### BRIEF DESCRIPTION

An epoxy resin and composition containing said epoxy resin is described for use in heat cured two component chemically resistant epoxy linings and composites. The concentration of RDGE should be minimized while still maintaining excellent chemical resistance. The epoxy resin exhibits excellent physical properties for use in a coating application.

The epoxy resin comprises resorcinol diglycidyl ether (RDGE), cresol novolak epoxy, and epoxy-functional p-hydroxystyrene. The epoxy resin may have a viscosity of less than 5,000 cP measured at 25°C (77°F) as measured by a Brookfield DVTII+, spindle number 5 at 50 RPM.

The RDGE may be present in an amount of less than 60% by area as measured by gel permeation chromatography, calibrated with narrow molecular weight polystyrene standards. In some embodiments, the RDGE content is between 45% and 57%.

The cresol novolak epoxy may be present in an amount between 20-40% by area as measured by gel permeation chromatography.

In some embodiments, the epoxy-functional p-hydroxystyrene is present in an amount between 1-10% by area as measured by gel permeation chromatography.

Coating compositions containing the epoxy and a solvent are also disclosed. The coating compositions may further include at least one filler and/or other additive. Non-limiting examples of other additives include pigments, adhesion promoters, flow agents, and leveling agents.

Further disclosed are processes for producing an epoxy resin. The processes may include reacting resorcinol, cresol novolak, and p-hydroxystyrene.

Processes for applying a chemically resistant coating are also disclosed. The processes include depositing the coating composition onto a substrate and curing the epoxy resin. The substrate may be a chemical storage tank, a transportation tank, a heat exchanger, or an emission stack.

These and other non-limiting characteristics are more particularly described below.

### BRIEF DESCRIPTION OF THE DRAWINGS

The following is a brief description of the drawings, which are presented for the purposes of illustrating the exemplary embodiments disclosed herein and not for the purposes of limiting the same.

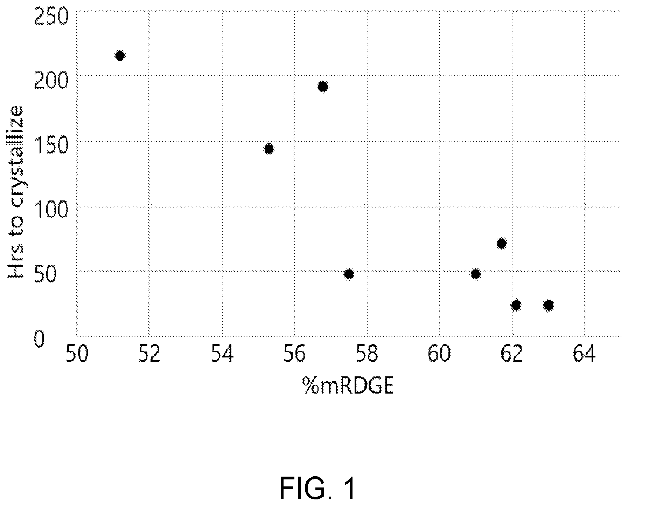

**FIG. 1** is a graph illustrating the relationship between crystallization resistance and percent RDGE in an epoxy resin.

### DETAILED DESCRIPTION

The present disclosure may be understood more readily by reference to the following detailed description of desired embodiments included therein. In the following specification and the claims which follow, reference will be made to a number of terms which shall be defined to have the following meanings.

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent can be used in practice or testing of the present disclosure. All publications, patent applications, patents, and other references mentioned herein are incorporated by reference in their entirety. The materials, methods, and articles disclosed herein are illustrative only and not intended to be limiting.

The singular forms "a," "an," and "the" include plural referents unless the context clearly dictates otherwise.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases that require the presence of the named ingredients/steps and permit the presence of other ingredients/steps. However, such description should be construed as also describing compositions, mixtures, or processes as "consisting of" and "consisting essentially of" the enumerated ingredients/steps, which allows the presence of only the named ingredients/steps, along with any impurities that might result therefrom, and excludes other ingredients/steps.

Unless indicated to the contrary, the numerical values in the specification should be understood to include numerical values which are the same when reduced to the same number of significant figures and numerical values which differ from the stated value by less than the experimental error of the conventional measurement technique of the type used to determine the particular value.

All ranges disclosed herein are inclusive of the recited endpoint and independently combinable (for example, the range of "from 2 to 10" is inclusive of the endpoints, 2 and 10). The endpoints of the ranges and any values disclosed herein are not limited to the precise range or value; they are sufficiently imprecise to include values approximating these ranges and/or values.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11%, and "about 1" may mean from 0.9-1.1.

The present disclosure relates to an epoxy resin containing resorcinol diglycidyl ether (RDGE), cresol novolak epoxy, and epoxy-functional p-hydroxystyrene. In some embodiments, RDGE is the primary component. It is desirable for chemically resistant epoxies to contain RDGE because the structure of RDGE gives the final cured coating excellent properties. The concentration of RDGE should be limited, however, because high concentrations of RDGE can contribute to crystallization of the epoxy resin as well as crystallization of the formulated coating containing said epoxy resin. In addition, the RDGE level should be minimized because RDGE is known to be a skin irritant. The present invention seeks to minimize RDGE content, while still maintaining excellent properties such as chemical resistance and viscosity that is low enough when formulated into a coating or composites that the coating can be applied by airless sprayer. The epoxy resin may also contain a limited amount of p-hydroxystyrene, because the cost of this raw material is very high in comparison to other raw materials used in the epoxy production. Surprisingly, it has been found that reaction of resorcinol, p-hydroxystyrene, and cresol novolak with epichlorohydrin can achieve excellent chemical resistance, good crystallization resistance, and reduced RDGE levels (e.g., less than 60%) while limiting cost. It should be understood that alternative to epichlorohydrin may be used instead or and/or in addition to epichlorohydrin. Non-limiting examples of alternatives to epichlorohydrin include epihalohydrin and epibromohydrin.

The reaction to produce the chemically resistant epoxy may begin with the addition of a dihydric phenol, cresol novolak, and p-hydroxystyrene along with epichlorohydrin to a reactor. The reaction mixture is heated and a suitable catalyst to catalyze the coupling reaction between epichlorohydrin and hydroxyl groups is added. After the epichlorohydrin has coupled with the hydroxyl groups, caustic soda is added to perform the deydrohalogenation reaction, forming the epoxy group, salt and water. After this reaction is complete, a wash with suitable buffer is performed to neutralize any unreacted caustic soda, and the product is further washed with water. After the water wash is complete, the product is subject to heat and vacuum to remove any volatiles, including any unreacted epichlorohydrin and water. The solvent content and/or additive(s) content in the coating composition can be adjusted to achieve a desired coating viscosity. In general, it is preferred to have an epoxy viscosity that is low so that solvent can be limited to limit VOCs.

The relative amounts of various components may be determined as area percentages via gel permeation chromatography (GPC). The GPC is calibrated with narrow molecular weight polystyrene standards. A very small amount of sample (mg) is dissolved in 10-20 ml THF and 40 uL are injected. The peaks are identified and quantified for area%. A molecular weight is calculated based on the polystyrene calibration curve. Polydispersity is calculated as Mw/Mn.

The following examples are provided to illustrate the devices and methods of the present disclosure. The examples are merely illustrative and are not intended to limit the disclosure to the materials, conditions, or process parameters set forth therein.

### EXAMPLES

### EXAMPLE 1: SYNTHESIS OF CHEMICALLY RESISTANT EPOXY

An epoxy resin containing resorcinol was synthesized for use in chemically resistant two component heat cured epoxy lining. 20.0 to 80.0 grams of resorcinol, 5.0 to 25.0 grams of a commercially obtained cresol novolak and 5.0 to 25.0 grams of commercially obtained p-hydroxystyrene were weighed into a clean three neck 1 liter round bottom flask equipped with an addition funnel, water cooled condenser, and nitrogen inlet and outlet. To this flask, epichlorohydrin was added in a molar ratio of epichlorohydrin to hydroxyl groups ranging from 1 to 5. Catalyst was also added to the reaction flask. Any catalyst suitable for catalyzing the reaction between hydroxyl group and epichlorohydrin can be used, including but not limited to octadecylbenzyl ammonium chloride, benzyltrimethyl ammonium chloride and other quaternary ammonium salts. The temperature was raised to 80°C with stirring and a slow nitrogen purge, and the reaction was allowed to proceed for 5 hours. After the initial 5-hour reaction period was complete, 25% caustic in water was added using the addition funnel. Other suitable caustics can be added to the reaction, including but not limited to potassium hydroxide, calcium hydroxide and sodium hydroxide. After the 20-minute addition period, the reaction was held at approximately 55°C for 1 hour with stirring and a slow nitrogen purge, after which time water was added and mixed for 15 minutes. The reaction was then poured into a separatory funnel and allowed to phase separate for at least 30 minutes, after which time the waste layer was decanted and discarded and the product layer was returned to the 1 liter three necked round bottom reaction flask. The flask was equipped again with an addition funnel, nitrogen inlet and outlet and magnetic stirring. The reaction temperature was brought back to 55°C, and once at reaction temperature, additional catalyst was added, and then caustic was added was added over the course of 20 minutes. The reaction was held at 55°C for 1 hour, after which time water was added and the reaction was allowed to mix for an additional 15 minutes. The reaction was then poured into a separatory funnel and allowed to phase separate for a minimum of 30 minutes. After the 30 minutes, the waste layer was decanted and disposed of, and the product layer was returned to the 1 liter three necked round bottom reaction flask. The flask was equipped again with an addition funnel, nitrogen inlet and outlet and magnetic stirring. The reaction temperature was set at 40°C, and the reaction was washed with a suitable buffer solution. Buffer solutions that can be used include but are not limited to sodium triphosphate, sodium diphosphate, and sodium monophosphate. The reaction was stirred for a minimum of 20 minutes, after which time the reaction was transferred to a separatory funnel and allowed to phase separate for a time period of at least 30 minutes. After the 30-minute time period, the waste layer was decanted and discarded, and the product layer was returned to the one liter three neck round bottom reaction flask equipped with magnetic stirring. The reaction temperature was set to 45°C, and water was added while the reaction was stirring. The reaction was allowed to stir for at least 20 minutes, after which time the reaction was poured into a separatory funnel and allowed to phase separate for a period of at least 30 minutes. After the 30-minute phase separation period, the waste layer was decanted and discarded and the reaction was returned to the one liter, three neck round bottom flask, equipped with magnetic stirring and set up for vacuum distillation. The temperature was set to 120°C, and vacuum distillation at full vacuum was conducted until visible degassing had ceased. After vacuum distillation was complete, the final product was poured into a suitable contained and measured for epoxy equivalent weight (EEW), viscosity and relative composition percent by gel permeation chromatography (GPC). The epoxy resin had an EEW 136, viscosity of 2500 cP at 25°C (77°F) as measured by a Brookfield DVTII+, spindle number 5 at 50 RPM, and approximately 50 to 60% monomeric resorcinol diglycidyl ether, 20 to 30% cresol novolak epoxy and 0.1 to 6% epoxy function p-hydroxystyrene. The GPC was measured on a Shimadzu GPC, RID-10A detector, 35°C column temperature, three Varian GPC/SEC Mesopore 300x7.5 mm columns, P/N 1113-6325 using inhibited tetrohydrofuran at a flow rate of 1 ml/min.

### EXAMPLE 2: SYNTHESIS OF CHEMICALLY RESISTANT EPOXY

An epoxy resin containing resorcinol was synthesized for use in chemically resistant two component heat cured epoxy lining. The synthesis conditions and procedures used in Example 1 were repeated, but with an increase in the amount of cresol novolak used, ranging from 1.25 to 4 times that used in Example 1. After vacuum distillation was complete, the final product was poured into a suitable contained and measured for epoxy equivalent weight (EEW), viscosity and relative composition percent by gel permeation chromatography (GPC). The epoxy resin had an EEW 141, viscosity of 4700 cP at (25°C) 77°F as measured by a Brookfield DVTII+, spindle number 5 at 50 RPM, and approximately 40 to 50% monomeric resorcinol diglycidyl ether, 30 to 40% cresol novolak epoxy and 0.1 to 6% epoxy function p-hydroxystyrene. The percentage of each component reported is an area percent as measured by GPC. The GPC was measured on a Shimadzu GPC, RID-10A detector, 35°C column temperature, three Varian GPC/SEC Mesopore 300x7.5 mm columns, P/N 1113-6325 using inhibited tetrohydrofuran at a flow rate of 1 ml/min and calibrated with narrow molecular weight distribution polystyrene standards.

### EXAMPLE 3. CHEMICAL RESISTANCE OF EXAMPLE 1 AND 2

The epoxy produced in Example 1 was catalyzed with an amine catalyst comprising a mixture of a cycloaliphatic amine and imidazoles at the stoichiometric level of amine to epoxy. The catalyzed mixture was poured into molds and allowed to cure at ambient for 24 hours, after which time it was cured at 121°C for 6 hours. After this time the castings were allowed to cool to room temperature, removed from the molds, and cut into appropriately sized samples for chemical immersion testing. As a reference, a similar epoxy to that of Example 1 was made, but without the cresol novolac and an increased amount of the p-hydroxystyrene, resulting in an epoxy resin. The comparative epoxy was catalyzed and cured under the same conditions. Cut casting pieces were rinsed with distilled water and immersed in the chemicals specified in Table 1 at the conditions specified in Table 1. Samples were removed weekly, rinsed with distilled water, allowed to dry for a minimum of 2 hours at ambient and then weighed for weight gain or loss. After the samples were weighed, they were placed back in the immersion chemicals. After 21 days immersion, the cured epoxy from Example had similar chemical resistance to the Comparative Example, with a lower percentage of RDGE and epoxy functional p-hydroxystyrene

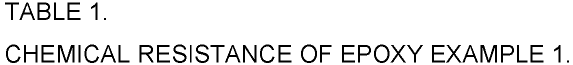

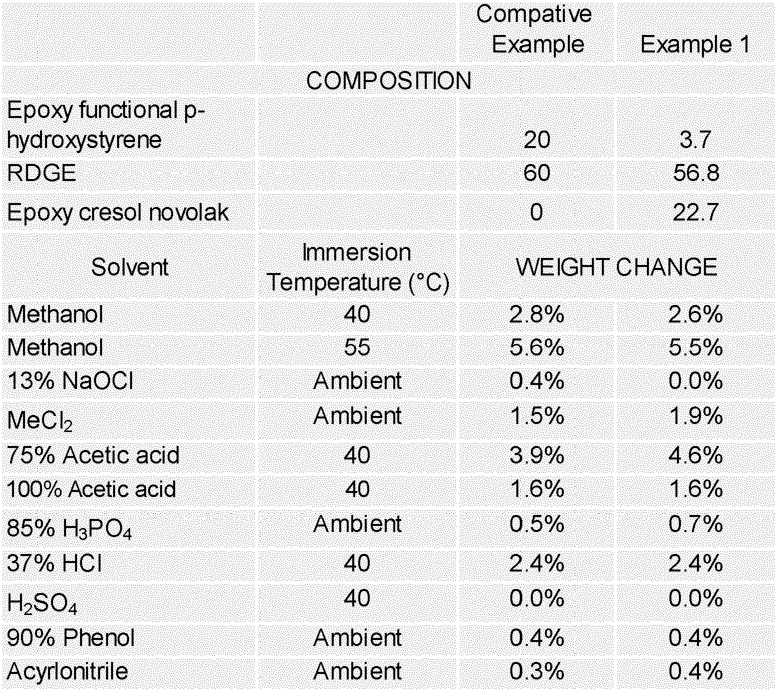

The chemical resistance of Example 2 was determined by mixing the epoxy with filler, adhesion promoter, flow and leveling agent, pigments, fumed silica and solvent to achieve a typical industrial coating formulation. The coating formulation was catalyzed with an amine catalyst comprising a mixture of a cycloaliphatic amine and imidazoles at the stoichiometric level of amine to epoxy and drawn down onto a plastic release sheet with a 20 mil drawndown bar. The catalyzed coating was allowed to cure at room temperature for approximately 24 hours, after which time it was cured at 122°C for 6 hours. After this time the drawdowns were allowed to cool to room temperature, detached from the plastic, and cut into appropriately sized samples for chemical immersion testing. As a reference, a similar epoxy to that of Example 1 was made, but without the cresol novolac and an increased amount of the p-hydroxystyrene, resulting in an epoxy resin. The comparative epoxy was formulated, catalyzed and cured under the same conditions. Cut coating pieces were rinsed with distilled water and immersed in the chemicals specified in Table 1 at the conditions specified in Table 1. Samples were removed weekly, rinsed with distilled water, allowed to dry for a minimum of 2 hours at ambient and then weighed for weight gain or loss. After the samples were weighed, they were placed back in the immersion chemicals. After 91 days immersion, the cured epoxy from Example had similar chemical resistance to the Control Sample, with a lower percentage of RDGE and epoxy functional p-hydroxystyrene.

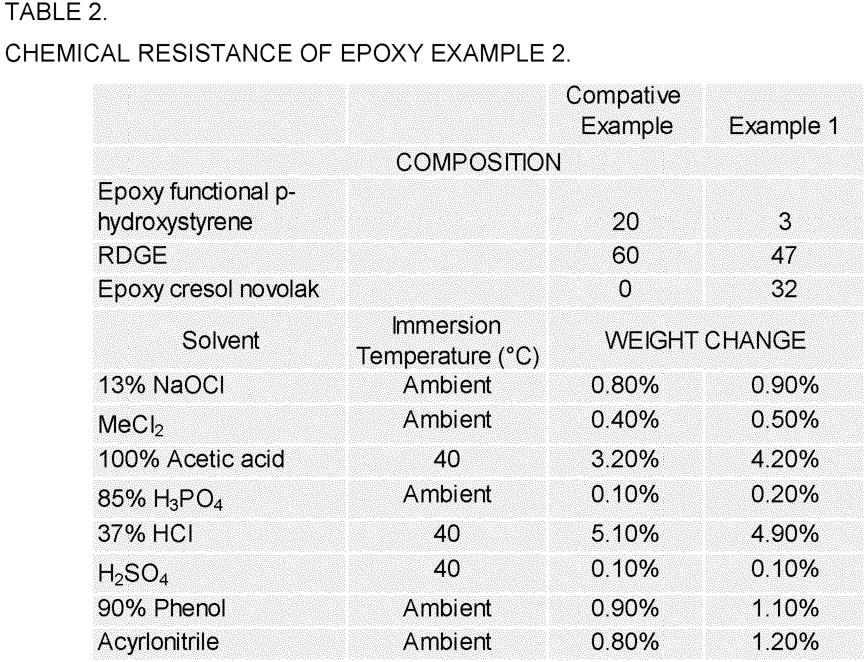

### EXAMPLE 4. CRYSTALLIZATION RESISTANCE OF EPOXIES CONTAINING RDGE

In order to evaluate the effect of RDGE on the crystallization resistance, epoxies containing varying amounts of RDGE with epoxy cresol novolak and epoxy p-hydroxystyrene were synthesized similar to Example 1 and Example 2. The epoxies were tested for crystallization resistance using ISO 4895 - Liquid epoxy resins -- Determination of tendency to crystallize. 20 grams of epoxy resin were mixed with 20 grams of calcium carbonate and 2 grams of ethanol. The mixture was transferred to an 80 ml test tube and capped with a stopper and placed upright in a refrigerator at -3.89°C (25°F). The test tubes were removed daily from the refrigerator, allowed to warm to room temperature, and then placed in a horizontal position to determine if the mixture flowed. If there was no flow to the mixture, it was determined to be crystallized. Figure 1 shows that at concentrations of less than 57% RDGE, there is a much longer time to crystallize, which greatly improves the coating shelf life without the applicator needing to heat and remix to reverse crystallization. The concentrations shown in Figure 1 are area percentages as measured by GPC.

It is desirable to have an epoxy resin viscosity of < 5,000 cP. At this viscosity resin, the amount of solvent needed in a coating formulation is minimized. High solvent levels cause environmental concerns with volatile organic compounds (VOCs). A series of epoxies containing RDGE, epoxy cresol novolak and epoxy functional p-hydroxystyrene were synthesized using the general procedure outlined in Example 1. At a concentration of 45% RDGE as measured by GPC, the measured viscosity was 7,700 cP, and at concentrations less than 40% RDGE the viscosity was less than 7,700 cP. At 40% RDGE as measured by GPC, the viscosity was too high as to be used in a coating application.

Therefore, based on crystallization resistance, viscosity of epoxy resin, and chemical resistance, it is desirable to have a RDGE concentration between 45% and 57%, an epoxy functional p-hydroxystyrene concentration between 1 and 10%, and an epoxy cresol novolak concentration between 20 and 40%.

## Claims

1. An epoxy resin comprising:
resorcinol diglycidyl ether;
cresol novolak epoxy; and
epoxy-functional p-hydroxystyrene.

2. The epoxy resin of claim 1, wherein the epoxy resin has a viscosity of less than 5,000 cP as measured at 25°C (77°F) as indicated in the description.

3. The epoxy resin of any one of claims 1 and 2, wherein the resorcinol diglycidyl ether is present in an amount of less than 60% by area as measured by gel permeation chromatography, as indicated in the description.

4. The epoxy resin of any one of claims 1-3, wherein the amount of resorcinol diglycidyl ether is between 45% and 57%.

5. The epoxy resin of any one of claims 1-4, wherein the cresol novolak epoxy is present in an amount between 20% and 40%.

6. The epoxy resin of any one of claim 1-5, wherein the epoxy-functional p-hydroxystyrene is present in an amount between 1% and 10%.

7. A coating composition comprising:
the epoxy resin of claim 1; and
a solvent.

8. The coating composition of claim 7, further comprising at least one filler and/or other additive.

9. The coating composition of claim 7, wherein the epoxy resin has a viscosity of less than 5,000 cP as measured at 25°C (77°F) as indicated in the description.

10. The coating composition of any one of claims 7-9, further comprising:
at least one additive selected from the group consisting of fillers, pigments, adhesion promoters, flow agents, and leveling agents.

11. The coating composition of any one of claims 7-10, wherein the resorcinol diglycidyl ether is present in an amount of less than 60% of the epoxy resin by area as measured by gel permeation chromatography, as indicated in the description.

12. The coating composition of any one of claims 7-11, wherein the amount of resorcinol diglycidyl ether is between 45% and 57% of the epoxy resin.

13. The coating composition of any one of claims 7-12, wherein the cresol novolak epoxy is present in an amount between 20% and 40% of the epoxy resin.

14. The coating composition of any one of claims 7-13, wherein the epoxy-functional p-hydroxystyrene is present in an amount between 1% and 10% of the epoxy resin.

15. A process for producing an epoxy resin comprising:
reacting resorcinol, cresol novolak, p-hydroxystyrene, and epichlorohydrin and then further reacting with caustic.

## Patentansprüche

1. Epoxidharz, umfassend:
Resorcindiglycidylether;
Kresolnovolak-Epoxid und
epoxyfunktionelles p-Hydroxystyrol.

2. Epoxidharz nach Anspruch 1, wobei das Epoxidharz eine Viskosität von weniger als 5000 cP aufweist, wie bei 25 °C (77°F) gemessen, wie in der Beschreibung angegeben.

3. Epoxidharz nach einem der Ansprüche 1 und 2, wobei der Resorcindiglycidylether in einer Menge von weniger als 60 Flächen-% vorliegt, wie durch Gelpermeationschromatographie gemessen, wie in der Beschreibung angegeben.

4. Epoxidharz nach einem der Ansprüche 1-3, wobei die Menge an Resorcindiglycidylether zwischen 45 % und 57 % liegt.

5. Epoxidharz nach einem der Ansprüche 1-4, wobei das Kresolnovolak-Epoxid in einer Menge zwischen 20 % und 40 % vorliegt.

6. Epoxidharz nach einem der Ansprüche 1-5, wobei das epoxyfunktionelle p-Hydroxystyrol in einer Menge zwischen 1 % und 10 % vorliegt.

7. Beschichtungszusammensetzung, umfassend:
das Epoxidharz nach Anspruch 1 und
ein Lösungsmittel.

8. Beschichtungszusammensetzung nach Anspruch 7, ferner umfassend mindestens einen Füllstoff und/oder ein anderes Additiv.

9. Beschichtungszusammensetzung nach Anspruch 7, wobei das Epoxidharz eine Viskosität von weniger als 5000 cP aufweist, wie bei 25 °C (77 °F) gemessen, wie in der Beschreibung angegeben.

10. Beschichtungszusammensetzung nach einem der Ansprüche 7-9, ferner umfassend:
mindestens ein Additiv, das aus der Gruppe bestehend aus Füllstoffen, Pigmenten, Haftvermittlern, Verlaufmitteln und Nivelliermitteln ausgewählt ist.

11. Beschichtungszusammensetzung nach einem der Ansprüche 7-10, wobei der Resorcindiglycidylether in einer Menge von weniger als 60 Flächen-% des Epoxidharzes vorliegt, wie durch Gelpermeationschromatographie gemessen, wie in der Beschreibung angegeben.

12. Beschichtungszusammensetzung nach einem der Ansprüche 7-11, wobei die Menge an Resorcindiglycidylether zwischen 45 % und 57 % des Epoxidharzes liegt.

13. Beschichtungszusammensetzung nach einem der Ansprüche 7-12, wobei das Kresolnovolak-Epoxid in einer Menge zwischen 20 % und 40 % des Epoxidharzes vorliegt.

14. Beschichtungszusammensetzung nach einem der Ansprüche 7-13, wobei das epoxyfunktionelle p-Hydroxystyrol in einer Menge zwischen 1 % und 10 % des Epoxidharzes vorliegt.

15. Verfahren zur Produktion eines Epoxidharzes, umfassend:
Umsetzen von Resorcin, Kresolnovolak, p-Hydroxystyrol und Epichlorhydrin und dann ferner Umsetzen mit einem Beizmittel.

## Revendications

1. Une résine époxy comprenant :
diglycidyl éther de résorcinol ;
époxy novolaque crésol ; et
p-hydroxystyrène époxy-fonctionnel.

2. La résine époxy selon la revendication 1, dans laquelle la résine époxy présente une viscosité inférieure à 5 000 cP (centipoise), mesurée à 25 °C (77 °F) comme indiqué dans la description.

3. La résine époxy selon l'une quelconque des revendications 1 et 2, dans laquelle le diglycidyl éther de résorcinol est présent en une quantité inférieure à 60 % en surface telle que mesurée par chromatographie par perméation de gel comme indiqué dans la description.

4. La résine époxy selon l'une quelconque des revendications 1 à 3, dans laquelle la quantité de diglycidyl éther de résorcinol est comprise entre 45 % et 57 %.

5. La résine époxy selon l'une quelconque des revendications 1 à 4, dans laquelle l'époxy novolaque crésol est présente en une quantité comprise entre 20 % et 40 %.

6. La résine époxy selon l'une quelconque des revendications 1 à 5, dans laquelle le p-hydroxystyrène époxy-fonctionnel est présent en une quantité comprise entre 1 % et 10 %.

7. Une composition de revêtement comprenant :
la résine époxy selon la
revendication 1 ; et un solvant.

8. La composition de revêtement selon la revendication 7, comprenant en outre au moins une charge et/ou un autre additif.

9. La composition de revêtement selon la revendication 7, dans laquelle la résine époxy a une viscosité inférieure à 5 000 cP telle que mesurée à 25 °C (77 °F) comme indiqué dans la description.

10. La composition de revêtement selon l'une quelconque des revendications 7 à 9, comprenant en outre :
au moins un additif sélectionné dans le groupe constitué par des charges, des pigments, des promoteurs d'adhérence, des agents d'écoulement et des agents de nivellement.

11. La composition de revêtement selon l'une quelconque des revendications 7 à 10, dans laquelle le diglycidyl éther de résorcinol est présent en une quantité inférieure à 60 % de la résine époxy par surface telle que mesurée par chromatographie par perméation de gel, comme indiqué dans la description.

12. La composition de revêtement selon l'une quelconque des revendications 7 à 11, dans laquelle la quantité de diglycidyl éther de résorcinol est comprise entre 45 % et 57 % de la résine époxy.

13. La composition de revêtement selon l'une quelconque des revendications 7 à 12, dans laquelle l'époxy novolaque crésol est présent en une quantité comprise entre 20 % et 40 % de la résine époxy.

14. La composition de revêtement selon l'une quelconque des revendications 7 à 13, dans laquelle le p-hydroxystyrène époxy-fonctionnel est présent en une quantité comprise entre 1 % et 10 % de la résine époxy.

15. Un procédé de production d'une résine époxy comprenant :
le résorcinol réactif, le novolaque de crésol, le p-hydroxystyrène et l'épichlorhydrine, puis en poursuivant la réaction avec une solution de soude caustique.
